# EUROPEAN PATENT APPLICATION

(11) **EP 4 707 478 A1**
(43) Date of publication of application: **11.03.2026**
(21) Application number: 25150259.7
(22) Date of filing: 03.01.2025
(51) Int. Cl.: E03C 1/18, A47B 77/06, A47J 47/20, A47L 17/02, A47L 19/04

(54) **MULTIFUNCTIONAL SINK**

(30) Priority: 10.09.2024 PL 44975424
(71) Applicant: Primagran Spolka Z Ograniczona Odpowiedzialnoscia, 82-103 Stegna (PL)
(72) Inventor: Sznajder, Marcin, 81-813 Sopot (PL)
(74) Representative: AOMB Polska Sp. z.o.o.

(57) **Abstract**

A multifunctional sink comprising: an upper surface (1), a rim (2) surrounding the upper surface (1), at least one main chamber (3), and at least one drain opening (41), where the main chamber (3) extends to a depth from the upper surface (1) perpendicularly downward and in the opposite direction, and contains a drain opening (41) at its bottom part, characterized in that the sink comprises at least one integrated vertical chamber (5), where the depth dimension (6) is greater than the width dimension (7), and where the vertical chamber (5) extends to a depth from the upper surface (1) perpendicularly downward and in the opposite direction.

## Description

### Field of the Invention

The present disclosure relates to a multifunctional sink. The solution is applicable both as
a kitchen sink and as a bathroom washbasin.

### Background

Numerous solutions for multifunctional sinks are known, both for kitchen and bathroom applications. The forms and shapes of sinks aim to provide the highest ergonomics, aesthetics in use, and increased functionality.

In the Chinese patent application CN103643723A, a multifunctional sink is disclosed, comprising a washing chamber and an additional chamber for the main controller, ozone generator, magnetic control switch, and a lid. A magnet is placed on the lid, and the ozone generator is connected via a wire. The tank, ozone generator, and magnetic control switch are respectively connected to the main controller, while a heating device is placed between the washing tank and the lid.

Meanwhile, the American patent description US6248982B1 discloses a combined sink with a cooking device. The sink has an upper part with a sink chamber and a detachable cooking vessel placed side by side, both having bottom drains. A heating element is located near the lower external part of the cooking chamber. The drain valve element is connected to the drain outlet of the cooking chamber. A control element located in the upper part of the sink can control both the drain valve and the heating element.

One of the existing problems in maintaining the hygiene of the sink's workspace is the accessories used during the sink's operation, which remain within the user's reach, disrupting the aesthetics of the space. Additionally, as a result of use, they remain wet, leaving the sink area dirty.

### Summary of the Invention

The purpose of the solution is to provide a sink design adapted for storing accessories or other items desired within the sink's workspace in a way that allows these items to drip-dry, while also improving the ergonomics, hygiene, and aesthetics of the space.

According to the invention, a multifunctional sink comprises: an upper surface, a rim surrounding the upper surface, at least one main chamber, and at least one drain opening, where the main chamber extends to a depth from the upper surface perpendicularly downward and in the opposite direction, and contains a drain opening at its bottom part. The sink includes at least one integrated vertical chamber, where the depth dimension is greater than the width dimension, and the vertical chamber extends to a depth from the upper surface perpendicularly downward and in the opposite direction.

An additional vertical chamber-where at least one of its horizontal dimensions remains relatively narrow compared to its depth-enables vertical drip-drying of wet kitchen accessories after use. The accessories are stored within the sink space in a practical, ergonomic, and hygienic manner. For example, the vertical chamber can be used in a kitchen setting for drying washed cutlery, sponges, or dishwashing brushes. It can also be used for placing pots with herbs used in cooking. This prevents the inconvenience of flooding the countertop area during watering, as water overflowing from the pot is immediately directed to the drain.

Advantageously, the vertical chamber comprises an additional drain at its bottom part.

The additional drain allows water to be discharged from the bottom of the chamber, preventing water from accumulating at the bottom, which would otherwise hinder the hygienic drying of items.

Advantageously, the additional drain is a channel connecting the vertical chamber to the main chamber.

The connecting channel can be an opening or a hollow section made between the two chambers, enabling water to flow out of the vertical chamber into the main chamber equipped with a drain opening.

In a more advantageous variant, the additional drain is an independent drain opening of the vertical chamber.

An independently functioning drain opening can serve as an overflow outlet in specific geometric variants of the sink. It operates independently of the main drain opening's capacity and can be equipped with an automatic plug, thereby increasing the functionality of the vertical chamber.

In a preferred embodiment of the disclosure, the depth dimension of the vertical chamber is at least 50% greater than its width dimension.

This shape proportion allows for the storage of longer items, such as handled dishwashing brushes or kitchen knives, in a near-vertical position, enabling faster drying of accessories. Additionally, it minimizes the problem of dripping water from the accessories onto the sink's upper surface and significantly reduces the space required within the sink for the vertical chamber.

In an advantageous example, the vertical chamber comprises at least one insert, whose side walls forming a closed profile in cross-section are fitted to the space of the vertical chamber.

An additional insert shaped to fit the vertical chamber remains visually and structurally consistent, increasing the functionality of the vertical chamber. For example, it allows for vertical and separated storage of smaller items such as toothbrushes.

Advantageously, the insert comprises at least one rim adapted for mounting the insert in the vertical chamber.

The inventor has observed that a particularly advantageous geometry is an insert mounted or suspended in the vertical chamber on a rim. This mounting method is more precise, aesthetically pleasing, and facilitates the removal of the insert and maintenance of cleanliness by separating the side walls of the vertical chamber and the insert. It minimizes the number of structural gaps, which are particularly prone to dirt accumulation.

In another advantageous disclosure, the insert comprises a peripheral rim at its upper edge, which aligns with the upper surface or is positioned below it.

Providing a flat upper sink surface free of protruding insert elements allows for placing additional accessories in the area of the vertical chamber, thereby increasing the functionality of the sink.

In another particularly advantageous embodiment, the vertical chamber comprises at least two inserts arranged in series along its length, filling the length of the vertical chamber.

The use of a vertical chamber adapted for multiple inserts arranged in series is particularly advantageous due to the ability to combine various functionalities of the chamber.

In one advantageous embodiment, the insert has no bottom.

Bottomless inserts are the easiest to maintain cleanliness and are particularly useful for storing longer items such as dishwashing brushes or kitchen knives.

In another advantageous embodiment, the insert contains at least one drainage hole at its bottom part.

When drainage holes are used, the insert can be utilized for storing smaller items that might otherwise block the drain opening of the vertical chamber. Additionally, the entire insert can be used as a planter for growing herbs. A larger number of drainage holes at the bottom of the insert can also serve as holders for toothbrushes, keeping them hygienically separated.

In another advantageous embodiment, the insert contains an integrated strainer at its bottom part.

The use of a strainer in the bottom of the insert can be particularly beneficial when the inserts are used as planters for herbs, as it helps avoid the risk of clogging the drain opening of the vertical chamber with soil dripping through the drainage holes.

In another advantageous embodiment, the sink comprises a drainer in the form of a depression shaped in the upper surface, with a sloped bottom connected to the vertical chamber.

This type of drainer can be used in kitchen sinks for accessories such as washing sponges, which for ergonomic reasons should be kept in an easily accessible location. In bathroom sinks, such a drainer can serve as a holder for bar soap. In this case, the drainer is located in the sink's surface area, where such accessories are typically placed, and where water tends to accumulate during sink use. The application of the drainer minimizes this issue and enhances the sink's functionality.

In a particularly advantageous embodiment, the upper surface, at least in the section bordering the main chamber and the vertical chamber, is positioned below the upper edge of the rim.

The application of a lowered upper surface in the section adjacent to the main chamber and the vertical chamber, or the use of a rim higher than the sink's upper surface while incorporating a vertical chamber with an additional drain as an independent drain opening, allows the overflow opening to be omitted in the sink design. It also increases the working volume of the main chamber. In the event of the main chamber's drain opening being blocked, the accumulating water will flow into the vertical chamber before overflowing the sink's rim.

In another advantageous embodiment, the sink comprises, in the area of the upper surface, an elevation (13) aligning with the rim (2) and structurally adapted for the installation of a faucet through a mounting opening.

In the event of water overflowing from the main chamber, thanks to the placement of the faucet's mounting opening on the elevation, the water will first flow into the drainer and the vertical chamber. This minimizes the risk of water leaking through the mounting opening during the overflow of the main chamber.

### Brief Description of the Drawings

- Fig. 1: discloses the first example of a multifunctional sink in a top view.
- Fig. 2: discloses the second example of a multifunctional sink in a first perspective view.
- Fig. 3: discloses the second example of a multifunctional sink in a second perspective view.
- Fig. 4: discloses the third example of a multifunctional sink in a top view.
- Fig. 5: discloses the third example of a multifunctional sink in cross-section C-C marked on Fig. 4.
- Fig. 6: discloses the third example of a multifunctional sink in cross-section B-B marked on Fig. 4.
- Fig. 7: discloses the first example of an insert with a through bottom.
- Fig. 8: discloses the second example of an insert with drainage holes in the bottom.
- Fig. 9: discloses the third example of a multifunctional sink in a top view with two inserts.
- Fig. 10: discloses the third example of a multifunctional sink in cross-section G-G marked on Fig. 9 with two inserts.

### Detailed Description of a Preferable Embodiment of the Invention

It should be noted that in the description of the drawings, the same reference numbers refer to the same or similar components performing the same or substantially similar function.

A more detailed description is provided with reference to specific examples, some of which are illustrated in the accompanying drawings, so that the features of the present disclosure can be understood in greater detail. It should be noted that the drawings illustrate only typical examples and should not be considered as limiting the scope of the claims. The drawings are included to facilitate understanding of the disclosure and are therefore not necessarily drawn to scale. The advantages of the subject of the claims will become apparent to those skilled in the art upon reading the description in conjunction with the accompanying drawings.

The above description presents only preferred examples and is not intended to limit the scope, applicability, or configuration of the disclosure. The following description provides those skilled in the art with information enabling the implementation of the preferred example of the disclosure as well as a general understanding of the concept of the solution, allowing for the introduction of other variants of the solution with modified functionality, altered arrangement of elements, including combinations of features from different embodiments, without departing from the scope of the disclosure.

Unless the context explicitly requires otherwise, throughout the description and claims, the words "comprise," "comprising," and similar terms should be interpreted in an inclusive sense, rather than an exclusive or exhaustive sense; that is, meaning "including but not limited to." Furthermore, the words "herein," "above," "below," and similar terms used in this application refer to this application as a whole, and not to any particular part of this application. Where the context allows, words used in the Detailed Description in the singular or plural may also include the plural or singular, respectively. The word "or" in relation to a list of two or more items includes all of the following interpretations of the word: any item on the list, all items on the list, and any combination of items on the list.

### Example 1 - Bathroom Washbasin

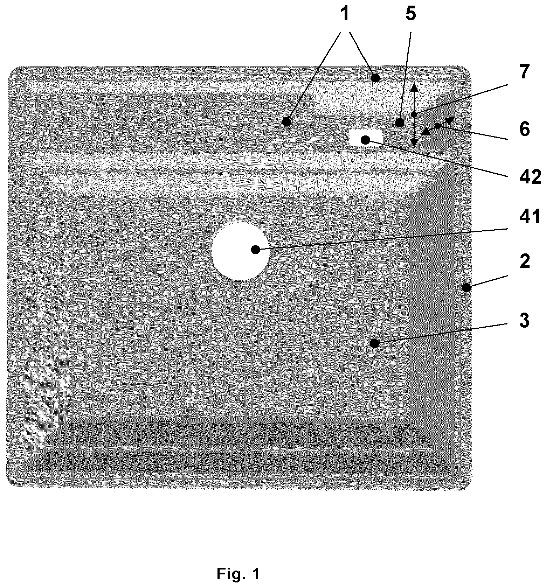

Fig. 1 discloses the first example of a multifunctional sink - a bathroom washbasin made of sanitary ceramics.

The multifunctional sink constructed according to the first example consists of an upper surface 1, a rim 2 surrounding the upper surface 1, one main chamber 3 with a drain opening 41, and one vertical chamber 5 with an additional drain 42 serving as an independent drain opening. The main chamber 3 and the vertical chamber 5 extend to a depth from the upper surface 1 perpendicularly downward and in the opposite direction and include, respectively, the drain opening 41 and the additional drain 42 as an independent drain opening at the lowest point of the bottom part. The depth dimension 6 of the vertical chamber 5 is greater than its width dimension 7. The sink has a rectangular outline; alternatively, in other embodiments, the shape of the sink can be arbitrary, including round. In the front working area of the sink, the main chamber 3 is located, with the vertical chamber 5 positioned behind it on the right side and a drainer 11 connected via a channel 11A to the vertical chamber 5 on the left side.

### Example 2 - Kitchen Sink

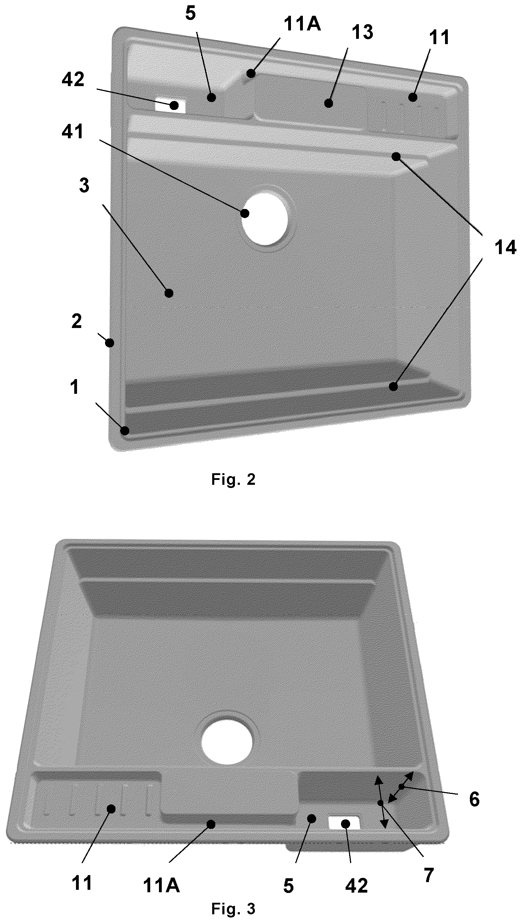

Fig. 2 and 3 disclose the second example of a multifunctional sink - a kitchen sink made of granite composite.

The multifunctional sink constructed according to the second example, as disclosed in Fig. 3, consists of monolithically formed upper surface 1, rim 2 surrounding the upper surface 1, one main chamber 3, and one vertical chamber 5, containing respectively a drain opening 41 and an additional drain 42 as an independent drain opening. The upper surface 1 is positioned below the rim 2. In the central part of the sink, behind the main chamber 3, there is an elevation 13 intended for creating a mounting opening for a faucet - in this example, the sink does not have a mounting opening.

The main chamber 3 and the vertical chamber 5 extend to a depth from the upper surface 1 perpendicularly downward and in the opposite direction. The main chamber 3 contains the drain opening 41, while the vertical chamber 5 contains the additional drain 42 as an independent drain opening at the lowest point of the bottom part. The additional drain 42 located in the vertical chamber 5 serves as an overflow outlet - when the water volume in the main chamber 3 exceeds its capacity, the water overflows into the drainer 11 and the vertical chamber 5, and then is discharged through this additional drain 42.

The walls of the main chamber 3 are equipped with thresholds 14, enabling the installation of various accessories designed for sink chambers. The sink includes a drainer 11 in the form of a depression shaped in the upper surface 1, connected via a channel 11A to the vertical chamber 5. The bottom of the drainer 11 and the channel 11A is uniformly sloped towards the vertical chamber 5, as also shown in Fig. 3.

As shown in Fig. 3, the depth dimension 6 of the vertical chamber 5 is greater than its width dimension 7.

### Example 3 - Kitchen Sink

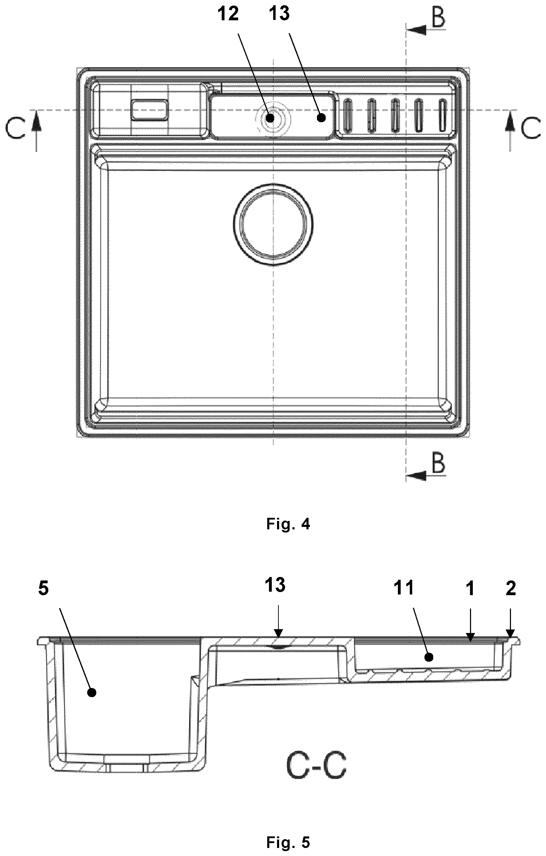

Fig. 4, 5, and 6 disclose the third example of a multifunctional sink - a kitchen sink made of quartz composite.

The third example is structurally consistent with the description of Example 2, except for the mounting opening 12. As shown in Fig. 4, a mounting opening 12 is made in the central part of the elevation 13.

Fig. 5 presents cross-section C-C of the sink through the vertical chamber 5, the elevation 13, and the drainer 11, revealing the profiling of the bottom of individual areas of the sink. The level of the upper surface 1, the higher-positioned rim 2, and the elevation 13, which is at the same height as the rim 2, are clearly visible.

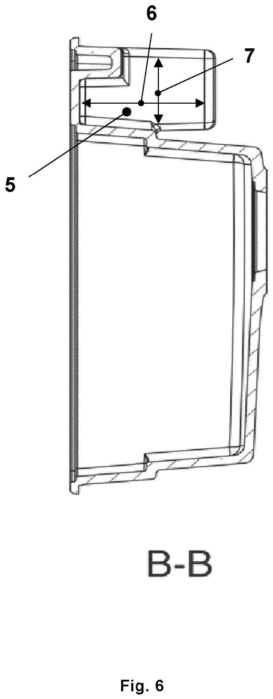

Fig. 6 discloses cross-section B-B, showing the proportion of the width dimension 7 to the depth dimension 6 of the vertical chamber 5. The depth dimension 6 of the vertical chamber 5 is more than 50% greater than the width dimension 7 - in this specific embodiment, it is twice as large.

### Example 4 - Insert with a Through Bottom

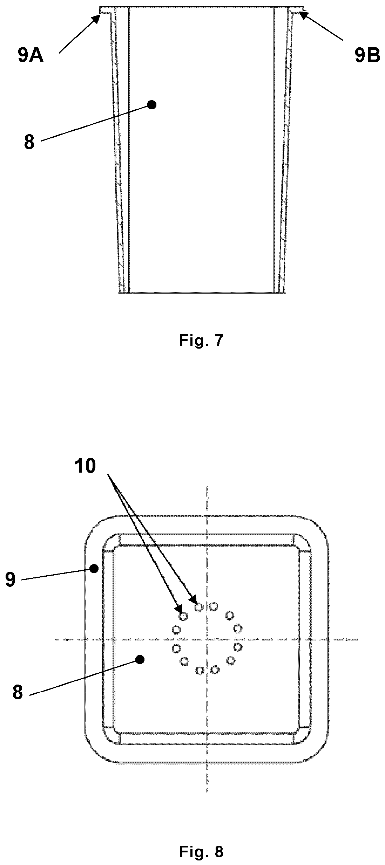

Fig. 7 discloses the first example of an insert with a through bottom made of thermally resistant plastic - cross-section in the symmetry plane. The insert 8 is a thin-walled element with a square cross-section, tapering downward and lacking a bottom part. Alternatively, the cross-section shape can also be round, which may be more advantageous for storing other accessories. At the upper edge of the insert 8, there are two opposite rims 9A and 9B.

### Example 5 - Insert with Drainage Holes in the Bottom

Fig. 8 discloses the second example of an insert with twelve drainage holes 10 in the bottom, made of granite composite - top view. The insert 8 is a thin-walled element with a square cross-section, tapering downward. The bottom part contains twelve drainage holes 10. At the upper edge of the insert 8, there is a peripheral rim 9.

### Example 6 - Kitchen Sink with Inserts

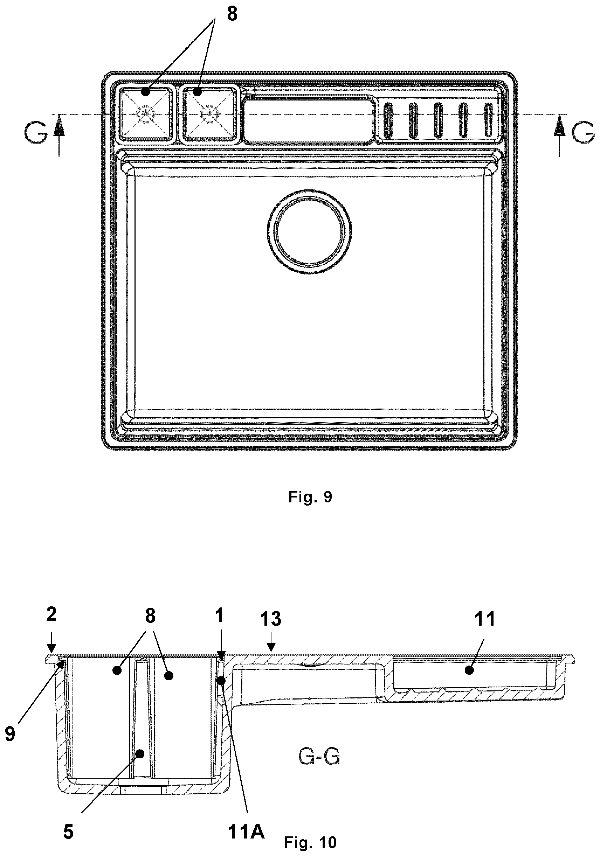

Fig. 9 and 10 disclose the third example of a multifunctional sink with two inserts. The presented sink and inserts 8 correspond to Examples 3 and 5.

In Fig. 9, two inserts 8 are shown positioned side by side - arranged in series along the entire length of the vertical chamber 5, with their peripheral rims 9 resting on the upper surface 1. The inserts 8 have side walls forming a closed profile adapted to the space of the vertical chamber 5 - a gap is left between the side walls, allowing the inserts to be fully positioned within the vertical chamber 5.

The upper edge of the inserts 8 is located below the elevation 13 and the rim 2. As shown in Fig. 10, the inserts 8 taper downward, leaving access to the vertical chamber 5 through the channel 11A of the drainer 11. This allows water to flow freely through the channel 11A, regardless of whether the insert 8 is installed or not.

As noted above, the specific terminology used to describe certain features or aspects of the disclosure should not be construed as implying that such terminology is redefined in this document to limit it to specific features or aspects of the disclosure with which the terminology is associated. In general, the terms used in the following claims should not be interpreted as limiting the disclosure to the specific examples disclosed in the specification, unless the detailed description section explicitly defines such terms.

Accordingly, the actual scope of the disclosure encompasses not only the disclosed examples but also all equivalent ways of practicing or implementing the preferred exemplary embodiment of the disclosure, with the understanding that various changes can be made to the function and arrangement of elements, including combinations of features from different embodiments, without departing from the scope of the disclosure. This specifically includes the possibility of using more than one main chamber 1 and additional surfaces intended for drying dishes. It is also possible to use other materials, including plastics, particularly for manufacturing the inserts. Furthermore, the above solution can also be applied to stainless steel sink technology, appropriately adapting the geometry of surface transitions to the manufacturing technology.

### LIST OF REFERENCE NUMBERS USED

1. upper surface
2. rim
3. main chamber
41. drain opening
42. additional drain
5. vertical chamber
6. depth dimension
7. width dimension
8. insert
9. rim
10. drainage hole
11. drainer
   11A. channel
12. mounting opening
13. elevation
14. threshold

## Claims

1. A multifunctional sink comprising:
an upper surface (1),
a rim (2) surrounding the upper surface (1),
at least one main chamber (3), and
at least one drain opening (41),
where the main chamber (3) extends to a depth from the upper surface (1) perpendicularly downward and in the opposite direction, and contains a drain opening (41) at the bottom part intended for connecting the sink to the sewage system,
**characterized in that**
it comprises at least one integrated vertical chamber (5), where the depth dimension (6) is greater than the width dimension (7),
where the vertical chamber (5) extends to a depth from the upper surface (1) perpendicularly downward and in the opposite direction.

2. The sink according to claim 1, **wherein** the vertical chamber (5) comprises an additional drain (42) at its bottom part.

3. The sink according to claim 2, **wherein** the additional drain (42) is an independent drain opening of the vertical chamber (5) intended for connecting the sink to the sewage system.

4. The sink according to claim 2, **wherein** the additional drain (42) is a channel connecting the vertical chamber (5) with the main chamber (3).

5. The sink according to claim 1, 2, 3, or 4, **wherein** the depth dimension (6) of the vertical chamber (5) is at least 50% greater than the width dimension (7).

6. The sink according to claim 1, 2, 3, 4, or 5, **wherein** the vertical chamber (5) comprises at least one insert (8), whose side walls forming a closed profile in cross-section are fitted to the vertical chamber (5).

7. The sink according to at least one of claims 1 to 6, **wherein** the insert (8) comprises at least one rim (9) adapted to fit the insert (8) into the vertical chamber (5).

8. The sink according to at least one of claims 1 to 7, **wherein** the insert (8) comprises a peripheral rim (9) at the upper edge of the insert (8), which aligns with the upper surface (1) or is positioned below it.

9. The sink according to at least one of claims 1 to 8, **wherein** the vertical chamber (5) contains at least two inserts (8) arranged in series along its length, filling the length of the vertical chamber (5).

10. The sink according to at least one of claims 1 to 9, **wherein** the insert (8) has no bottom.

11. The sink according to at least one of claims 1 to 10, **wherein** the insert (8) contains at least one drainage hole (10) at its bottom part.

12. The sink according to at least one of claims 1 to 11, **wherein** the insert (8) contains an integrated strainer at its bottom part.

13. The sink according to at least one of claims 1 to 12, **wherein** the sink comprises a drainer (11) in the form of a depression with a sloped bottom, shaped in the upper surface (1) and connected to the vertical chamber (5).

14. The sink according to at least one of claims 1 to 13, **wherein** the upper surface (1), at least in the section bordering the main chamber (3) and the vertical chamber (5), is positioned below the upper edge of the rim (2).

15. The sink according to at least one of claims 1 to 14, **wherein** it comprises, in the area of the upper surface (1), an elevation (13) aligning with the rim (2) and containing a mounting opening (12) adapted for installing a faucet.
